# EUROPEAN PATENT APPLICATION

(11) **EP 3 041 308 A1**
(43) Date of publication of application: **06.07.2016**
(21) Application number: 15197962.2
(22) Date of filing: 27.10.2007
(51) Int. Cl.: H04W 74/08

(54) **METHOD AND APPARATUS FOR ASSIGNING RADIO RESOURCES AND CONTROLLING TRANSMISSION PARAMETERS ON A RANDOM ACCESS CHANNEL**

(30) Priority: 27.10.2006 US 863276 P
(62) Divisional of application: 11153279.2
(71) Applicant: InterDigital Technology Corporation, Wilmington, DE 19809 (US)
(72) Inventor: CAVE, Christopher, Montreal, Québec H9A 3J2 (CA); MARINIER, Paul, Brossard, Québec J4X 2J7 (CA); ROY, Vincent, Longeueil, Québec J4N 1N3 (CA); DIGIROLAMO, Rocco, Laval, Québec H7K 3Y3 (CA)
(74) Representative: Awapatent AB

(57) **Abstract**

A wireless transmit and receive unit (WTRU) and a method for a WTRU to establish access to a channel using random access procedure are disclosed. The method comprises receiving an indication of a first set of available signatures for a random access channel (RACH), receiving an indication of a second set of available signatures for enhanced uplink transmissions, randomly selecting, at the WTRU, a signature from the second set of available signatures for establishing random access to an enhanced uplink, and sending a preamble using the selected signature.

Furthermore, a network entity and a method are disclosed. The method comprises sending a first set of available signatures reserved for random access channel (RACH) and a second set of available signatures reserved for enhanced uplink transmissions, receiving a preamble from a wireless transmit and receive unit (WTRU), and determining whether the WTRU is requesting enhanced uplink transmission resources based on whether the received preamble comprises a signature in the second set of available signatures.

## Description

### FIELD OF INVENTION

The present invention is related to wireless communications.

### BACKGROUND

In 3GPP UMTS (Third Generation Partnership Project Universal Mobile Telecommunication System) wireless systems, the Random Access Channel (RACH) is an uplink (UL) transport channel that is used for transfer of data and/or control information in the absence of a dedicated radio link. The RACH is mapped to the physical random access channel (PRACH).

Access to the RACH by a wireless transmit-receive unit (WTRU) is based on a slotted-Aloha approach, with acquisition indication received from a radio access network (RAN). The WTRU must first acquire the channel by transmitting a preamble, which comprises a signature sequence that is randomly selected among a set of predetermined sequences. The transmit power of the initial preamble is determined by open loop power control, with parameters determined and broadcast by the RAN.

The WTRU then waits for an acquisition indication from a Node B, which is signaled in the Downlink (DL) on the Acquisition Indicator Channel (AICH). When the Node B detects the PRACH preamble associated with RACH attempt, it echoes on the AICH an identical signature sequence to indicate to the WTRU to transmit over PRACH.

In the case where no AICH is detected, the WTRU increases its transmission power by a predetermined amount and retransmits the preamble in the next available transmission slot. The process is repeated until the AICH is detected by the WTRU, or until a maximum number of preamble transmissions is reached. If a negative acknowledgement is received or the maximum number of transmissions is reached, RACH access has failed and a backoff procedure is performed at the medium access (MAC) layer.

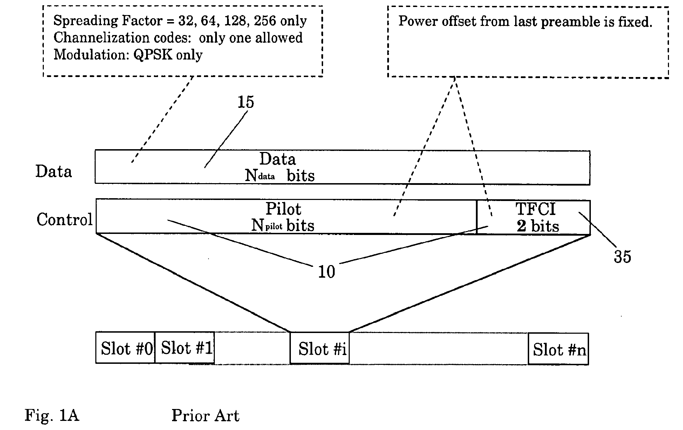

In the case where a positive AICH is transmitted by the Node B, the WTRU transmits the PRACH frame, which consists of a control part 10 and data part 15 as shown in Figure 1A.

The preamble and AICH procedure provide a way to for the WTRU to reserve the RACH as well as determine the right power for transmission. The power of the control part 10 is set with a fixed offset from the power of the last transmitted preamble. The transmission power of the data part 15 is set using a gain factor with respect to the control part, which is determined in the same way as other UL dedicated physical channels. The gain factor depends on the spreading factor that is used for the data part. Spreading factors 256, 128, 64 and 32 are allowed for the PRACH data part.

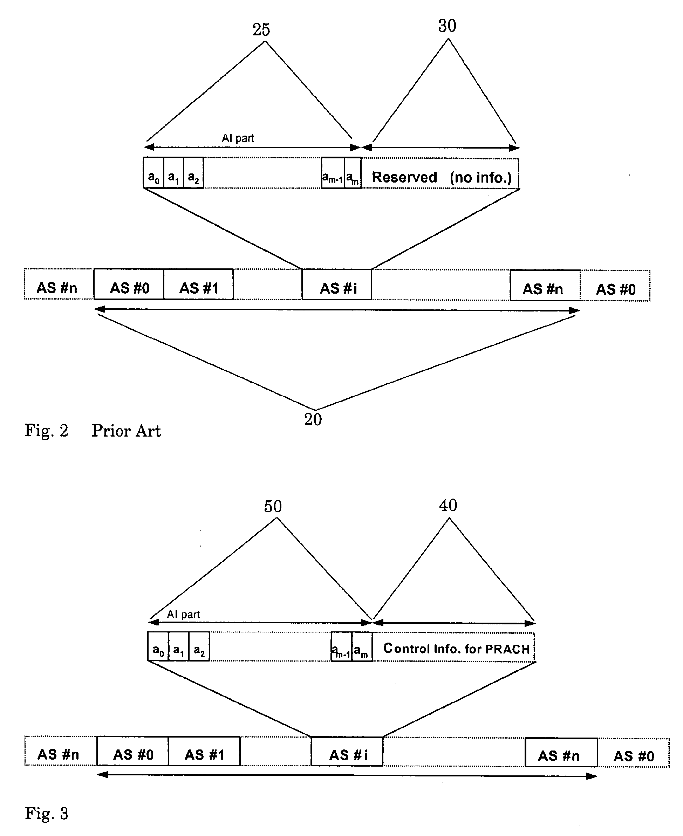

Referring to Figure 2, the AICH consists of a sequence of consecutive access slots 20. Each access slot consists of two parts, an Acquisition-Indicator (AI) part 25 and a part 30 of duration 1024 chips with no transmission. The part of the slot with no transmission 30 is reserved for possible future use. The spreading factor (SF) used for channelization of the AICH is 256.

The transmission rate for RACH/PRACH is limited (single code with spreading factor 32) in existing 3GPP systems. One reason for the limitation is to avoid excessive UL interference caused by WTRUs when transmitting high rate bursts over RACH/PRACH. When a WTRU gains RACH access, it must independently select the transport format for transmission. There is no way for the RAN to dynamically control the transmission rate of WTRUs over RACH/PRACH.

### SUMMARY

Disclosed is a method and apparatus for assigning radio resources and controlling parameters for transmission over a contention-based channel that is used by a WRTU to transfer data and/or control information in an uplink to a radio access network (RAN). In one embodiment, a method and apparatus are disclosed for increasing the rate of data transmission over the channel while limiting any resulting increase of noise.

### BRIEF DESCRIPTION OF THE DRAWINGS

Figure 1A shows an existing frame format for a physical random access channel (PRACH).
Figure 1B shows a frame format for a physical random access channel (PRACH) according to the present disclosure.
Figure 2 shows a frame structure for an existing acquisition indicator channel (AICH).
Figure 3 shows a structure for an AICH according to the present disclosure.
Figure 4 is a functional block diagram of a portion of a representative wireless communication system with a WTRU and a Node-B.
Figure 5 shows a method for distinguishing among different PRACH types according to the present disclosure.

### DETAILED DESCRIPTION

Hereafter, a wireless transmit/receive unit (WTRU) includes but is not limited to a user equipment, mobile station, fixed or mobile subscriber unit, pager, or any other type of device capable of operating in a wireless environment. When referred to hereafter, a base station includes but is not limited to a Node-B, site controller, access point or any other type of interfacing device in a wireless environment.

### Although described within the scope of 3GPP UMTS and UMTS Terrestrial Radio Access (UTRA) wireless communication systems, the following embodiments and teachings are applicable to other wireless communications technologies, including those systems employing random access channels for uplink transmission.

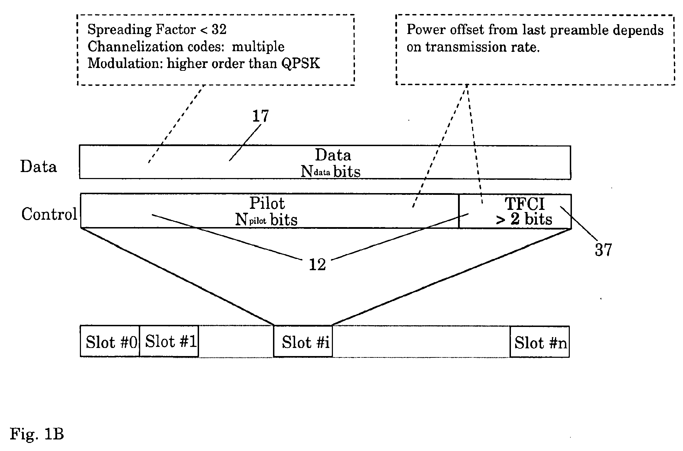

Figure 1B shows a proposed frame format for a physical random access channel (PRACH). Figure 1B indicates several methods, not to be considered exhaustive, which may be used individually or in any combination to increase the transmission rate of PRACH frames. A first method includes decreasing a spreading factor (SF) used on the data part 17. A second method includes increasing the number of channelization codes used for the data part 17. A third method includes increasing the order of modulations (e.g. using 8-PSK, 16-QAM, 64-QAM) and variable coding rates (i.e. MSC) for the data part 17. Optionally, the control part of the PRACH frame 12 may be modified to support the higher data rates. An increase in the transmission power of the control part is proposed to improve the reliability of the pilot field when high data rates are used. Specifically, the power offset between the last preamble and the PRACH control part (Pp-m = P_{message-control} - P_{preamble}) may be transmission rate dependant, rather than having a single value.

Such an increase in achievable rates of RACH/PRACH may result in a significant increase in the number of transport formats (i.e. slot formats) that need to be supported on the Data portion of the PRACH. The slot format for the Control part 10 of the existing PRACH only provides two bits in the transport format combination index (TFCI) field 35. This currently limits to four the number of transport formats that can be supported on the Data portion of the PRACH. To circumvent this limitation, a new slot format is proposed for the control part 12 of the PRACH, shown in Figure 1B. This new slot format may provide more than two bits in the TFCI field 37. For example, having 8 bits in the TFCI field 35 would allow for up to 2⁸= 256 different slot formats on the Data portion 17 of the PRACH.

For backward compatibility this newly defined slot format, containing more than two bits in the TFCI field 37, will need to coexist with the former slot format which only provided for two bits in the TFCI field 35. Having two different PRACH types coexist, the PRACH and an Enhanced-PRACH, brings a challenge for a base station to properly decode a PRACH since the base station currently has no means by which it can learn which PRACH type a particular WTRU uses for the control part 10 and data part 15 of its PRACH transmission.

This backward compatibility issue can be addressed by performing a segregation of the radio resources used by the PRACH in two groups. One group is reserved for the PRACH transmissions using the old PRACH format and another group is reserved for the Enhanced PRACH transmissions using the new PRACH format. This segregation can be ensured by the RAN through dedicated radio resource channel (RRC) signaling or broadcast RRC signaling. Three examples, not to be considered exhaustive or limiting, follow.

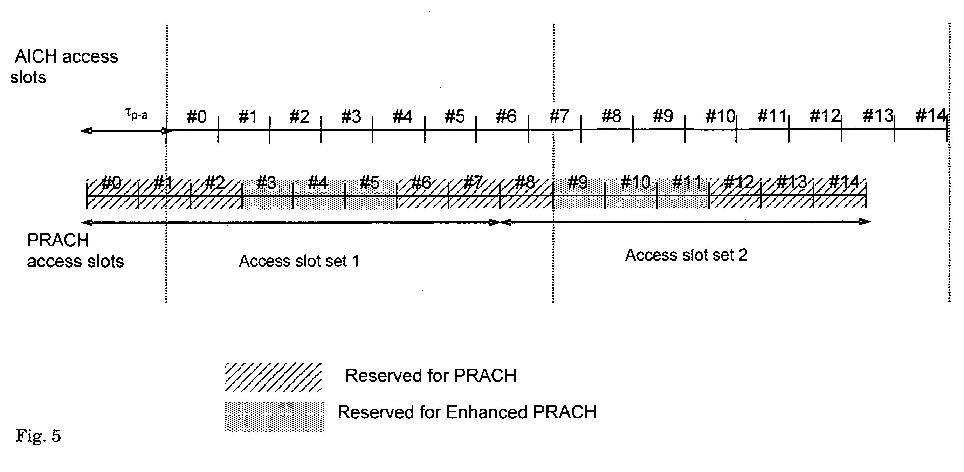

A first example, illustrated in Figure 5, is segregation in the time slots available for PRACH transmissions. The RAN could reserve a certain number of slots for PRACH transmission using a given PRACH format while reserving another set of slots for PRACH transmission using another PRACH slot format. Figure 5 illustrates one particular example of segmentation by access slot; other examples are possible.

A second example is segregation of the scrambling codes used for PRACH transmissions. The RAN could reserve a certain number of scrambling codes for PRACH transmission using a given PRACH format (e.g. traditional PRACH) while reserving another set of scrambling codes for PRACH transmission using another PRACH format (e.g. Enhanced PRACH). The assignment of scrambling codes may be signaled by higher layers and by RRC broadcast signaling.

A third example is segregation of signature sequences used in the PRACH preamble. The RAN could reserve a certain number of signature sequences for PRACH transmission using a given PRACH format (e.g. traditional PRACH) while reserving another set of signature sequences for PRACH transmission using another PRACH format (e.g. Enhanced PRACH). An example of how signature sequences can be segregated is shown in the Table 1, where P0 to P8 are reserved for PRACH and P9 to P15 are reserved for Enhanced PRACH. Note that this is just one realization of segregation by signature sequence; others are possible.

**Table 1**

| **PRACH Type** | **Preamble signature** | **Value of *n*** | | | | | | | | | | | | | | | |
|---|---|---|---|---|---|---|---|---|---|---|---|---|---|---|---|---|---|
| | | **0** | **1** | **2** | **3** | **4** | **5** | **6** | **7** | **8** | **9** | **10** | **11** | **12** | **13** | **14** | **15** |
| | P₀(n) | 1 | 1 | 1 | 1 | 1 | 1 | 1 | 1 | 1 | 1 | 1 | 1 | 1 | 1 | 1 | 1 |
| | P₁(n) | 1 | -1 | 1 | -1 | 1 | -1 | 1 | -1 | 1 | -1 | 1 | -1 | 1 | -1 | 1 | -1 |
| | P₂(n) | 1 | 1 | -1 | -1 | 1 | 1 | -1 | -1 | 1 | 1 | -1 | -1 | 1 | 1 | -1 | -1 |
| | P₃(n) | 1 | -1 | -1 | 1 | 1 | -1 | -1 | 1 | 1 | -1 | -1 | 1 | 1 | -1 | -1 | 1 |
| PRACH | P₄(n) | 1 | 1 | 1 | 1 | -1 | -1 | -1 | -1 | 1 | 1 | 1 | 1 | -1 | -1 | -1 | -1 |
| | P₅(n) | 1 | -1 | 1 | -1 | -1 | 1 | -1 | 1 | 1 | -1 | 1 | -1 | -1 | 1 | -1 | 1 |
| | P₆(n) | 1 | 1 | -1 | -1 | -1 | -1 | 1 | 1 | 1 | 1 | -1 | -1 | -1 | -1 | 1 | 1 |
| | P₇(n) | 1 | -1 | -1 | 1 | -1 | 1 | 1 | -1 | 1 | -1 | -1 | 1 | -1 | 1 | 1 | -1 |
| | P₈(n) | 1 | 1 | 1 | 1 | 1 | 1 | 1 | 1 | -1 | -1 | -1 | -1 | -1 | -1 | -1 | -1 |
| | P₉(n) | 1 | -1 | 1 | -1 | 1 | -1 | 1 | -1 | -1 | 1 | -1 | 1 | -1 | 1 | -1 | 1 |
| | P₁₀(n) | 1 | 1 | -1 | -1 | 1 | 1 | -1 | -1 | -1 | -1 | 1 | 1 | -1 | -1 | 1 | 1 |
| Enhanced PRACH | P₁₁(n) | 1 | -1 | -1 | 1 | 1 | -1 | -1 | 1 | -1 | 1 | 1 | -1 | -1 | 1 | 1 | -1 |
| | P₁₂(n) | 1 | 1 | 1 | 1 | -1 | -1 | -1 | -1 | -1 | -1 | -1 | -1 | 1 | 1 | 1 | 1 |
| | P₁₃(n) | 1 | -1 | 1 | -1 | -1 | 1 | -1 | 1 | -1 | 1 | -1 | 1 | 1 | -1 | 1 | -1 |
| | P₁₄(n) | 1 | 1 | -1 | -1 | -1 | -1 | 1 | 1 | -1 | -1 | 1 | 1 | 1 | 1 | -1 | -1 |
| | P₁₅(n) | 1 | -1 | -1 | 1 | -1 | 1 | 1 | -1 | -1 | 1 | 1 | -1 | 1 | -1 | -1 | 1 |

Increasing the data rate according to the disclosed method may increase the amount of noise generated. In order to avoid excessive noise rise caused by high data rate RACH/PRACH bursts, the RAN may be configured to control the interference generated by the WTRUs. Specifically, the RAN may indicate to the WTRU, prior to WTRU transmission of the PRACH frame, the maximum transmission rate and/or power that can be used for transmitting the PRACH frame. Alternatively, a grant may be pre-configured (e.g. through RRC broadcast signaling) to allow the WTRU to start transmission and, optionally, the grant may be readjusted by the UTRA Network (UTRAN) while the WTRU is transmitting over the Enhanced RACH.

The information signaled from the RAN to the WTRU may effectively limit the system impact caused by the PRACH frame, while allowing the WTRU to select the highest transport block size and maximize the efficiency of the RACH access. A grant-type signaling mechanism is disclosed, where the RAN indicates to the WTRU the maximum amount of UL resources that can be consumed for transmission of the PRACH frame. The following non-exhaustive list of example metrics and parameters is proposed, the metrics to be used individually or in any combination to determine what UL resources should be granted for enhanced PRACH transmission.

A first example is maximum power ratio, which indicates the maximum power ratio between the enhanced PRACH data part 17 and the control part 12, or the maximum power ratio between the enhanced PRACH data part 17 and the preamble power. The maximum power ratio is one possible measure of the transmission power of the WTRU. Controlling the power of the WTRU is one way of controlling noise rise or interference caused by the WTRU in the UL. This power control may be performed by the base station.

A second example of a metric for determining what UL resources should be granted for enhanced PRACH transmission is maximum transmission power, which indicates the maximum total power that the WTRU can use for transmission of the PRACH frame with enhanced data part 17 and control part 12. The maximum total power can be determined as an absolute value (e.g. 20 dBm), or as a relative power with respect to the preamble power. As with the previous example, controlling the power of the WTRU effectively controls the noise rise or interference that is caused by the WTRU in the UL. This power control may be performed by the base station.

A third example of a metric is maximum RACH transport block size. Determination of this quantity allows the UTRAN to control interference that is generated by the WTRU by controlling the amount of time that the RACH is used.

A fourth example of a metric is transmission time interval (TTI) size.

A fifth example of a metric is a maximum amount of time (e.g. number of TTI) the WTRU can transmit.

The value of the grant may be mapped to an index, where the mapping is known by the WTRU and RAN. The mapping may be broadcast by the RAN over BCCH/BCH, configured through higher layer signaling or pre-configured in WTRU devices.

Various mechanisms are proposed in the following, to allow the RAN to convey the information described above. These mechanisms can be used individually or in any combination.

In one embodiment, shown in Figure 3, the control information is conveyed to the WTRU using an existing AICH or similar channel. Specifically, the RAN takes advantage of an acquisition indication that is sent between the preamble and the PRACH frame to indicate to the WTRU the maximum transmission rate. A proposed structure of an AICH is shown in Figure 3. The first part 50 of the AICH access slot may have the same meaning as in the existing AICH, whereas the last part 40 which was previously the reserved part 30 contains the control information.

In one example embodiment, the number of chips in the above examples may be retained: the first part, or AI part, 50 of the AICH may contain 4096 chips and the second part 40 may contain 1024 chips. Using a SF256 channelization code, a sequence of 8 real-valued signals can be transmitted over the 1024 chips. A predefined sequence of symbols, e.g. signature sequence, can be defined for each of the control information levels. The mapping between symbol sequence and control information index should be known at the RAN and the WTRU; this mapping may be broadcast by the RAN, configured through higher layer signaling or pre-configured.

Alternatively, the last 1024 chips 40 of the AICH slot can be interpreted as a new bit field (e.g. 4 bits) which contains the index of the control information, where channel coding may be used to increase decoding reliability of the bit field.

Alternatively, the control grant may be conveying using any of: existing enhanced access gate channel (E-AGCH) and enhanced reverse gate channel (E-RGCH) to indicate "grant" for PRACH frames; the forward access channel (FACH) transport channel or similar channel; and the broadcast control channel (BCCH) logical channel, which is mapped to the broadcast channel (BCH) transport channel. In this case, the control information is broadcast throughout the cell and may be either common to all WTRUs using the PRACH, or signaled individually to WTRUs using RACH/PRACH. In addition one may use other new or existing physical layer signaling and/or L2 control channel to convey the control grant.

The RAN may make a decision as to the WTRU maximum transmission rate and/or power for each WTRU that has successfully acquired the RACH through the preamble mechanism. This decision may be made autonomously or be directed by the WTRU.

The RAN could make this decision independently for each WTRU that has successfully acquired the channel. An example of a metric for this is a limit on the UL interference. Although effective when a single WTRU has acquired the RACH channel, it may lead to inefficiencies when more than one WTRU transmits on the RACH. In the latter case, a WTRU may be assigned a higher rate/power but may not need it. The extra assignment to this WTRU would be lost, as no other WTRU could use it.

In this approach, the RAN tries to assign the capacity among the WTRUs based on limiting UL interference, while at the same time maximizing the probability that this extra capacity will be used. In order to achieve this, the RAN may require an indication as to the WTRU buffer occupancy. A higher occupancy would imply a higher probability of using the extra capacity. The WTRU need only provide a coarse indication of buffer occupancy (e.g. low, medium, high, very high). This information could be signaled during the RACH preamble in several alternative ways. As one example, a trailer may be appended to the preamble message with the buffer occupancy indication. Alternatively, the information may be coded in the preamble signature sequences; that is, reserving a set of signature sequences for each of the buffer occupancy levels.

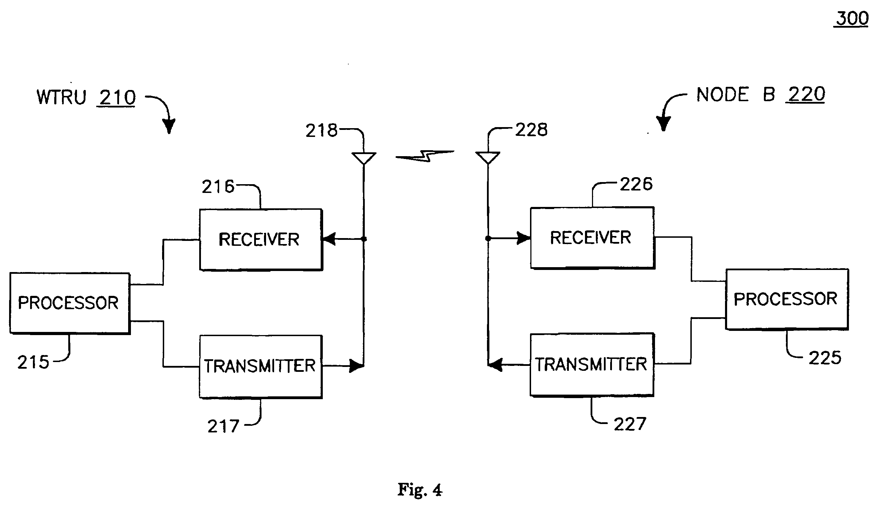

Figure 4 is a functional block diagram 300 of a portion of a representative wireless communication system with a WTRU 210 and a Node-B, or base station 220. The WTRU 210 and base station 220 are in two-way communication with each other, and are both configured to perform a method such as one of the embodiments described above for increasing a data transmission rate over a random access channel.

In addition to the components that may be found in a typical WTRU, the WTRU 210 includes a processor 215, a receiver 216, a transmitter 217, and an antenna 218. The processor 215 is configured to perform a method such as one of the embodiments described above for increasing a data transmission rate over a random access channel. The receiver 216 and the transmitter 217 are in communication with the processor 215. The antenna 218 is in communication with both the receiver 216 and the transmitter 217 to facilitate the transmission and reception of wireless data.

In addition to the components that may be found in a typical Node-B, the Node-B 220 includes a processor 225, a receiver 226, a transmitter 227, and an antenna 228. The processor 225 is configured to perform a method such as one of the embodiments described above for increasing a data transmission rate over a random access channel. The receiver 226 and the transmitter 227 are in communication with the processor 225. The antenna 228 is in communication with both the receiver 226 and the transmitter 227 to facilitate the transmission and reception of wireless data.

By way of example, embodiments may be implemented in a base station, wireless network controller, at the data link layer or the network layer, in the form of software or hardware in a WCDMA FDD or long term evolution (LTE).

### EMBODIMENTS

1. A method for assigning radio resources and controlling transmission parameters over a random access channel (RACH) in a wireless communications network.
2. The method as in embodiment 1, wherein the transmission parameters comprise a data transmission rate.
3. The method as in embodiment 2, wherein the transmission rate is increased by performing at least one of the group consisting of:
   reducing the spreading factor for at least one channelization code used in the data part; and
   increasing the order of modulation used in the data part.
4. The method as in any preceding embodiment comprising:
   defining an access channel configured for transmission of an access channel frame having a plurality of slots, each slot further comprising a data part and a control part, the control part further comprising a transport format combination index (TFCI) field;
   defining an acquisition indicator channel (AICH) configured for transmission of an AICH frame comprising a plurality of access slots; each access slot comprising a reserved part; and
   increasing the transmission rate of said access channel frame by performing at least one of the group consisting of: using more than one spreading factor for channelization codes used in the data part; varying a number of channelization codes used in the data part; varying an order of modulation in the data part; varying coding rates in the data part; and, varying transmission power of the control part.
5. The method as in any preceding embodiment, comprising the steps of:
   defining an access channel configured for transmission of an access channel frame having a plurality of slots, each slot further comprising a data part and a control part, the control part further comprising a transport format combination index (TFCI) field;
   defining an acquisition indicator channel (AICH) configured for transmission of an AICH frame comprising a plurality of access slots; each access slot comprising a reserved part; and
   increasing the transmission rate of said access channel frame by performing at least one of the group consisting of: using more than one spreading factor for channelization codes used in the data part; varying a number of channelization codes used in the data part; varying an order of modulation in the data part; varying coding rates in the data part; and, varying transmission power of the control part.
6. The method as in any preceding embodiment, comprising
   defining an enhanced physical random access channel (PRACH) configured for transmission of a PRACH frame comprising a plurality of PRACH slots, each PRACH slot further comprising a data part and a control part, the control part further comprising a transport format combination index (TFCI) field;
   defining an acquisition indicator channel (AICH) configured for transmission of an AICH frame comprising a plurality of access slots; each access slot comprising a reserved part; and
   performing at least one of the group consisting of: using more than one spreading factor for channelization codes used in the data part; varying a number of channelization codes used in the data part; varying an order of modulation in the data part; varying coding rates in the data part; and, varying transmission power of the control part.
7. The method as in any preceding embodiment, comprising increasing the data transmission rate over the RACH.
8. The method as in any preceding embodiment, wherein increasing the transmission rate comprises performing at least one of:
   reducing the spreading factor for one or more channelization codes used in the data part; and
   increasing the order of modulation used in the data part.
9. The method as in any preceding embodiment, wherein the network includes a wireless transmit receive unit (WTRU) and a radio access network (RAN).
10. A method as in any preceding embodiment, wherein the random access channel comprises a physical random access channel (PRACH).
11. The method as in any preceding embodiment further comprising dynamically controlling the data rate for transmission over the RACH or PRACH.
12. A method as in any preceding embodiment further comprising modifying the PRACH to support higher data rates.
13. A method as in any preceding embodiment comprising modifying a data part of a PRACH channel frame slot.
14. A method as in any one of the preceding embodiments including using more than one spreading factor for channelization codes.
15. A method as in any preceding embodiment including varying a number of channelization codes.
16. A method as in any preceding embodiment including varying a modulation order.
17. A method as in any preceding embodiment including use of variable coding rates.
18. A method as in any preceding embodiment further comprising: varying the transmission power of a control part of a channel frame slot.
19. A method as in any preceding embodiment using a power offset from a last preamble of the PRACH control part.
20. A method as in embodiment 19, wherein the power offset is transmission-rate dependant.
21. A method as in any preceding embodiment further comprising defining a new slot format for a control part of the PRACH.
22. A method as in embodiment 21, in which the new format includes having more than two bits in a transport format combination index field (TFCI).
23. A method as in any preceding embodiment wherein any new PRACH slot format is made compatible with existing slot formats.
24. A method as in embodiment 23 wherein making a new slot format compatible comprises segregating the radio resources used by the PRACH into groups based on PRACH slot format.
25. The method of embodiment 24 wherein the segregation is performed by the RAN.
26. The method of any one of embodiments 24-25 wherein segregating the radio resources includes the RAN reserving a certain number of slots for PRACH transmission using a given PRACH slot format while reserving another set of slots for PRACH transmission using another PRACH slot format.
27. A method of any one of embodiments 24-25, wherein segregating the radio resources includes reserving a certain number of scrambling codes for PRACH transmission using a given PRACH slot format while reserving another set of scrambling codes for PRACH transmission using another PRACH slot format.
28. A method of any one of embodiment 24-25, wherein segregating the radio resources includes reserving a certain number of signature sequences in a PRACH Preamble for PRACH transmissions using a given PRACH slot format while reserving another set of signature sequences for PRACH transmission using another PRACH slot format.
29. A method as in any preceding embodiment wherein RAN is configured to control interference generated by the WTRUs.
30. A method as in any preceding embodiment wherein the RAN indicates to the WTRU a maximum transmission rate that can be used by the WTRU before it transmits the PRACH frame.
31. A method as in any preceding embodiment wherein the RAN indicates to the WTRU a maximum transmission power that can be used by the WTRU before it transmits the PRACH frame.
32. A method as in any preceding embodiment further comprising: the RAN indicating to the WTRU a maximum amount of uplink (UL) resources for transmission of the PRACH frame using a grant metric.
33. The method of embodiment 27 wherein the grant metric includes a maximum power ratio indication which indicates the maximum power ratio between the PRACH frame slot data part and the frame slot control part.
34. The method of embodiment 28 wherein the grant metric includes a maximum power ratio indication which indicates the maximum power ratio between the PRACH frame slot data part and the preamble power.
35. A method of any one of embodiments 32-34 wherein the grant metric includes the maximum transmission power.
36. A method as in any one of embodiments 32-35 wherein the grant metric includes a maximum RACH transport block size.
37. A method as in any one of embodiments 32-36 wherein the grant metric includes the transmission time interval (TTI) size.
38. A method as in any one of embodiments 32-37 wherein the grant metric includes the maximum amount of time the WTRU can transmit.
39. A method as in any one of embodiments 32-38 wherein the grant metric is mapped to an index known by the WTRU and the RAN.
40. A method as in embodiment 39 wherein the mapping is broadcast by the RAN.
41. A method as in any preceding embodiment wherein assigning of radio resources and controlling parameters for transmission includes conveying information to the WTRU using an acquisition indicator channel (AICH) access slot.
42. The method of embodiment 41, wherein the (AICH) access slot is sent between the preamble and the PRACH frame.
43. The method of embodiment 41 or 42 wherein the AICH access slot is used to indicate to the WTRU the maximum transmission rate.
44. The method of any one of embodiments 41-43 wherein the AICH includes chips that contain control information.
45. The method of embodiment 44, wherein at least 1024 chips contain control information.
46. The method of embodiment 44 or 45, further comprising using SF 256 channelization code and transmitting a sequence of 8 real-valued signals over the 1024 chips.
47. The method of embodiment 45 or 46 wherein the control information chips are interpreted as a new bit field which contains an index of the control information where channel coding can be used to increase decoding reliability of the bit field.
48. The method of any one of embodiments 32-47 wherein a control grant is conveyed using an enhanced absolute grant channel (E-AGCH) and Enhanced Relative Grant Channel (E-RGCH) to indicate grant for PRACH frames.
49. The method of any one of embodiments 32-47 wherein a control grant is conveyed using a forward access channel (FACH) transport channel.
50. A method of any one of embodiments 32-47 wherein a control grant is conveyed using a broadcast control channel (BCCH) logical channel which is mapped to the broadcast channel.
51. A method of any one of embodiments 32-50 wherein an existing physical layer signaling is used to control the grant.
52. A method of any preceding embodiment further comprising the RAN determining the maximum transmission rate for each WTRU that has successfully acquired the RACH.
53. The method of any preceding embodiment further comprising the RAN determining the maximum transmission power for each WTRU that has successfully acquired the RACH.
54. The method of embodiment 52 or 53 wherein the determination of the maximum transmission rate for each WTRU is directed by the WTRU.
55. The method of any one of embodiments 53 or 54 wherein the determination of the maximum transmission power for each WTRU is directed by the WTRU.
56. The method of any one of embodiments 52-55 wherein the determination of the maximum transmission rate for each WTRU is made independently based on limiting uplink interference and maximizing the probability that extra capacity will be used.
57. The method of embodiment 52 wherein the determination of the maximum transmission power for each WTRU is made independently based on limiting uplink interference and maximizing the probability that extra capacity will be used.
58. The method of any one of embodiments 52-57 wherein the WTRU provides a buffer occupancy to the RAN.
59. The method of embodiment 58 wherein the WTRU provides the buffer occupancy during the RACH preamble by appending the trailer to the preamble message with the buffer occupancy indication.
60. The method of embodiment 58 wherein the WTRU provides the buffer occupancy during the RACH preamble by coding the information in the preamble signature sequences.
61. A WTRU configured to perform the method of any one of the preceding embodiments.
62. A RAN configured to perform the method of any one of embodiments 1-60.
63. A Node B configured to perform the method of any one of embodiments 1-60.
64. Software configured to perform the method of any one of embodiments 1-60.
65. Hardware for use in a wireless communication system, configured to perform the method of any one of embodiments 1-60.
66. A computer-readable medium containing software configured to perform the method of any one of embodiments 1-60.
67. A method for assigning radio resources and controlling transmission parameters over a random access channel in wireless communications, comprising the steps of:
   defining an enhanced physical random access channel (PRACH) configured for transmission of a PRACH frame comprising a plurality of PRACH slots, each PRACH slot further comprising a data part and a control part, the control part further comprising a transport format combination index (TFCI) field;
   defining an acquisition indicator channel (AICH) configured for transmission of an AICH frame comprising a plurality of access slots; each access slot comprising a reserved part; and
   performing at least one of the group consisting of: using more than one spreading factor for channelization codes used in the data part; varying a number of channelization codes used in the data part; varying an order of modulation in the data part; varying coding rates in the data part; and, varying transmission power of the control part.
68. The method of embodiment 67, wherein the controlled parameters comprise a transmission rate, the transmission rate being increased by performing at least one of the group consisting of:
   reducing the spreading factor for at least one channelization code used in the data part; and
   increasing the order of modulation used in the data part.
69. The method of embodiment 67, wherein varying the transmission power of the control part is based on a data transmission rate.
70. The method of embodiment 67, further comprising the step of varying a slot format in the control part to increase a number of bits in the TFCI field.
71. The method of embodiment 70, wherein at least two different slot formats on the data part are used simultaneously.
72. The method of embodiment 71, wherein the different slot formats are distinguished by segregating radio resources used by the PRACH into groups, each group being reserved for transmission using one of the slot formats.
73. The method of embodiment 72, wherein the segregation is done by one of:
   segregation in time slots available for PRACH transmission;
   segregation of scrambling codes used for PRACH transmissions; and
   segregation of signature sequences used in a PRACH preamble.
74. The method of embodiment 68. further comprising the step of indicating at least one of:
   a maximum transmission rate that can be used for transmitting the PRACH frame; and
   a maximum power that can be used for transmitting the PRACH frame.
75. The method of embodiment 74, comprising indicating at least one of:
   a maximum ratio of the PRACH data part power to the control part power;
   a maximum ratio of the PRACH data part power to a power of a preamble;
   an absolute maximum total power for transmission of the PRACH frame;
   a maximum power for transmission of the PRACH frame relative to the power of a preamble ;
   a maximum random access channel (RACH) transport block size;
   a transmission time interval (TTI) size; and
   a maximum amount of transmission time as a maximum number of TTIs.
76. The method of embodiment 67, wherein the assigning of radio resources and controlling parameters for transmission are indicated using at least one of:
   the reserved part of the AICH;
   an existing enhanced access gate channel (E-AGCH);
   an enhanced reverse gate channel (E-RGCH);
   a forward access channel (FACH); and
   a broadcast control channel (BCCH).
77. The method of embodiment74, further comprising maximizing a probability that available communication capacity will be used by indicating a buffer occupancy during a RACH preamble; the buffer occupancy being indicated by at least one of:
   appending a trailer to a preamble message; and
   coding in preamble signature sequences.
78. A wireless transmit-receive unit (WTRU) comprising:
   a receiver;
   a transmitter; and
   a processor in communication with the receiver and the transmitter;
   the processor configured for the transmission of data and control information over a random access channel (RACH) mapped to an enhanced physical random access channel (PRACH), the PRACH configured for transmission of a PRACH frame comprising a plurality of PRACH slots, each PRACH slot further comprising a data part and a control part, the control part further comprising a transport format combination index (TFCI) field,
   the processor further configured for reception of an acquisition indicator channel (AICH) configured for transmission of an AICH frame comprising a plurality of access slots, each access slot comprising an acquisition indicator (AI) part and a reserved part,
   the processor further configured for assigning radio resources and controlling transmission parameters by performing at least one of the group consisting of: using more than one spreading factor for channelization codes used in the data part; varying a number of channelization codes used in the data part; varying an order of modulation in the data part; varying coding rates in the data part; and, varying transmission power of the control part.
79. The WTRU of embodiment 7 8, wherein the controlled parameters comprise a transmission rate and processor is configured for increasing the transmission rate by performing at least one of the group consisting of:
   reducing the spreading factor for one or more channelization codes used in the data part; and
   increasing the order of modulation used in the data part.
80. The WTRU of embodiment 78, wherein the processor is further configured to vary the transmission power of the control part based on a data transmission rate.
81. The WTRU of embodiment 78, wherein the processor is further configured for transmitting a PRACH with an arbitrary number of bits in the TFCI field.
82. The WTRU of embodiment 81, wherein the processor is further configured to signal which of the possible slot formats the WTRU is using.
83. The WTRU of embodiment 82, wherein the processor is further configured to signal which slot format the WTRU is using by one of:
   segregation in time slots available for PRACH transmission;
   segregation of scrambling codes used for PRACH transmissions; and
   segregation of signature sequences used in a PRACH preamble.
84. The WTRU of embodiment 80, wherein the processor is further configured to receive at least one of:
   a maximum transmission rate that can be used for transmitting the PRACH frame; and
   a maximum power that can be used for transmitting the PRACH frame.
85. The WTRU of embodiment 84, wherein the processor is further configured to receive the maximum transmission rate or maximum power when indicated as at least one of:
   a maximum ratio of the PRACH data part power to the control part power;
   a maximum ratio of the PRACH data part power to a power of a preamble;
   an absolute maximum total power for transmission of the PRACH frame;
   a maximum power for transmission of the PRACH frame relative to the power of a preamble ;
   a maximum random access channel (RACH) transport block size;
   a transmission time interval (TTI) size; and
   a maximum amount of transmission time as a maximum number of TTIs.
86. The WTRU of embodiment 7 8, wherein the processor is further configured to receive information on the assigning of radio resources and the controlling of parameters for transmission contained in at least one of:
   the reserved part of the AICH;
   an existing enhanced access gate channel (E-AGCH);
   an enhanced reverse gate channel (E-RGCH);
   a forward access channel (FACH); and
   a broadcast control channel (BCCH);
87. The WTRU of embodiment 7 8, wherein the processor is further configured to indicate a buffer occupancy of the WTRU.
88. The WTRU of embodiment 87, wherein the processor is further configured to indicate the buffer occupancy during transmission of a RACH preamble by at least one of:
   appending a trailer to a preamble message; and
   coding in preamble signature sequences.
89. A wireless base station comprising:
   a receiver;
   a transmitter; and
   a processor in communication with the receiver and the transmitter;
   the processor configured for the reception of data and control information transmitted over a random access channel (RACH) mapped to an enhanced physical random access channel (PRACH), the PRACH configured for transmission of a PRACH frame comprising a plurality of PRACH slots, each PRACH slot further comprising a data part and a control part, the control part including a transport format combination index (TFCI) field,
   the processor further configured for transmission of an acquisition indicator channel (AICH) configured for transmission of an AICH frame comprising a plurality of access slots, each access slot comprising an acquisition indicator (AI) part and a reserved part,
   the processor further configured for assigning radio resources and controlling transmission parameters by performance of at least one of the group consisting of: using more than one spreading factor for channelization codes used in the data part; varying a number of channelization codes used in the data part; varying an order of modulation in the data part; varying coding rates in the data part; and, varying transmission power of the control part.
90. The base station of embodiment 89, wherein the controlled parameters comprise a transmission rate and the processor is configured for increasing the transmission rate by performing at least one of the group consisting of:
   reducing the spreading factor for at least one channelization code used in the data part; and
   increasing the order of modulation used in the data part.
91. A method for assigning radio resources and controlling transmission parameters over a random access channel in wireless communications, comprising the steps of:
   defining an access channel configured for transmission of an access channel frame having a plurality of slots, each slot further comprising a data part and a control part, the control part further comprising a transport format combination index (TFCI) field;
   defining an acquisition indicator channel (AICH) configured for transmission of an AICH frame comprising a plurality of access slots; each access slot comprising a reserved part; and
   increasing the transmission rate of said access channel frame by performing at least one of the group consisting of: using more than one spreading factor for channelization codes used in the data part; varying a number of channelization codes used in the data part; varying an order of modulation in the data part; varying coding rates in the data part; and, varying transmission power of the control part.

Although features and elements are described above in particular combinations, each feature or element can be used alone without the other features and elements or in various combinations with or without other features and elements. The methods or flow charts provided herein may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

## Claims

1. A method for a wireless transmit and receive unit, WTRU, to establish access to a channel using random access procedure, the method comprising:
receiving an indication of a first set of available signatures for a random access channel, RACH;
receiving an indication of a second set of available signatures for enhanced uplink transmissions;
randomly selecting, at the WTRU, a signature from the second set of available signatures for establishing random access to an enhanced uplink; and
sending a preamble using the selected signature.

2. The method of claim 1, further comprising:
receiving an indication of a first preamble scrambling code reserved for the random access channel, RACH; and
receiving an indication of a second scrambling code reserved for the enhanced uplink transmissions, wherein the preamble is transmitted using the second scrambling code when establishing access to the enhanced uplink.

3. A wireless transmit and receive unit, WTRU, comprising:
a processor configured for:
receiving an indication of a first set of available signatures for a random access channel, RACH;
receiving an indication of a second set of available signatures for enhanced uplink transmissions;
randomly selecting a signature from the second set of available signatures for establishing random access to an enhanced uplink; and
sending a preamble using the selected signature.

4. The WTRU of claim 3, wherein the processor is further configured for:
receiving an indication of a first preamble scrambling code reserved for the random access channel, RACH; and
receiving an indication of a second scrambling code reserved for the enhanced uplink transmissions, wherein the preamble is transmitted using the second scrambling code when establishing access to the enhanced uplink.

5. A method comprising:
sending a first set of available signatures reserved for random access channel, RACH, and a second set of available signatures reserved for enhanced uplink transmissions;
receiving a preamble from a wireless transmit and receive unit, WTRU; and
determining whether the WTRU is requesting enhanced uplink transmission resources based on whether the received preamble comprises a signature in the second set of available signatures.

6. The method of claim 5, further comprising:
upon determining that the WTRU is requesting enhanced uplink transmission resources, allocating resources for the WTRU to transmit in an enhanced uplink.

7. The method of claim 5, wherein it is determined that the WTRU is requesting enhanced uplink transmission resources when the received preamble comprises a signature in the second set of available signatures.

8. The method of claim 5, wherein it is determined that the WTRU is not requesting uplink transmission resources when the received preamble comprises a signature in the first set of available signatures.

9. The method of claim 5, further comprising:
sending a first set preamble scrambling codes reserved for RACH and a second set of scrambling codes reserved for an enhanced uplink.

10. The method of claim 5, wherein the preamble is received via a preamble scrambling code in the second set of scrambling codes when WTRU is requesting enhanced uplink transmission resources.

11. A network entity comprising:
a processor configured to:
send a first set of available signatures reserved for random access channel, RACH, and a second set of available signatures reserved for enhanced uplink transmissions;
receive a preamble from a wireless transmit and receive unit, WTRU; and
determine whether the WTRU is requesting enhanced uplink transmission resources based on whether the received preamble comprises a signature in the second set of available signatures.

12. The network entity of claim 11, wherein the processor is further configured to:
upon determining that the WTRU is requesting enhanced uplink transmission resources, allocate resources for the WTRU to transmit in an enhanced uplink.

13. The network entity of claim 11, wherein it is determined that the WTRU is requesting enhanced uplink transmission resources when the received preamble comprises a signature in the second set of available signatures.

14. The network entity of claim 11, wherein it is determined that the WTRU is not requesting uplink transmission resources when the received preamble comprises a signature in the first set of available signatures.

15. The network entity of claim 11, wherein the processor is further configured to:
send a first set of preamble scrambling codes reserved for RACH and a second set of scrambling codes reserved for an enhanced uplink.
